(19) Europäisches Patentamt
European Patent Office
Office européen des brevets

(11) **EP 1 837 622 B1**

(12) **EUROPÄISCHE PATENTSCHRIFT**

(45) Veröffentlichungstag und Bekanntmachung des Hinweises auf die Patenterteilung:
**22.04.2009 Patentblatt 2009/17**

(51) Int Cl.:
*G01B 11/24* *(2006.01)*  *H01R 43/04* *(2006.01)*

(21) Anmeldenummer: **07103606.5**

(22) Anmeldetag: **06.03.2007**

(54) **Verfahren und Einrichtung zur Bestimmung der geometrischen Daten einer Kabelbestückung**

Method and device for determining the geometrical data of a cable crimp

Procédé et dispositif pour déterminer les données géométriques de bornes formées par sertissage

(84) Benannte Vertragsstaaten:
**CH DE FR GB IT LI**

(30) Priorität: **16.03.2006 EP 06111270**

(43) Veröffentlichungstag der Anmeldung:
**26.09.2007 Patentblatt 2007/39**

(73) Patentinhaber: **Komax Holding AG**
**6036 Dierikon (CH)**

(72) Erfinder: **Viviroli, Stefan**
**6048, Horw (CH)**

(74) Vertreter: **Gaussmann, Andreas et al**
**Inventio AG**
**Seestrasse 55 Postfach**
**6052 Hergiswil / NW (CH)**

(56) Entgegenhaltungen:
EP-A- 0 667 658      DE-C1- 19 811 573
FR-A- 2 553 914

• **PATENT ABSTRACTS OF JAPAN Bd. 1997, Nr. 10, 31. Oktober 1997 (1997-10-31) & JP 09 171878 A (YAZAKI CORP), 30. Juni 1997 (1997-06-30)**

EP 1 837 622 B1

## Beschreibung

Die Erfindung betrifft ein Verfahren und eine Einrichtung zur Bestimmung der geometrischen Daten einer Kabelbestückung, wobei die Oberfläche der Kabelbestückung abgetastet wird und daraus geometrische Daten der Kabelbestückung bestimmt werden gemäss der Definition der unabhängigen Patentansprüche.

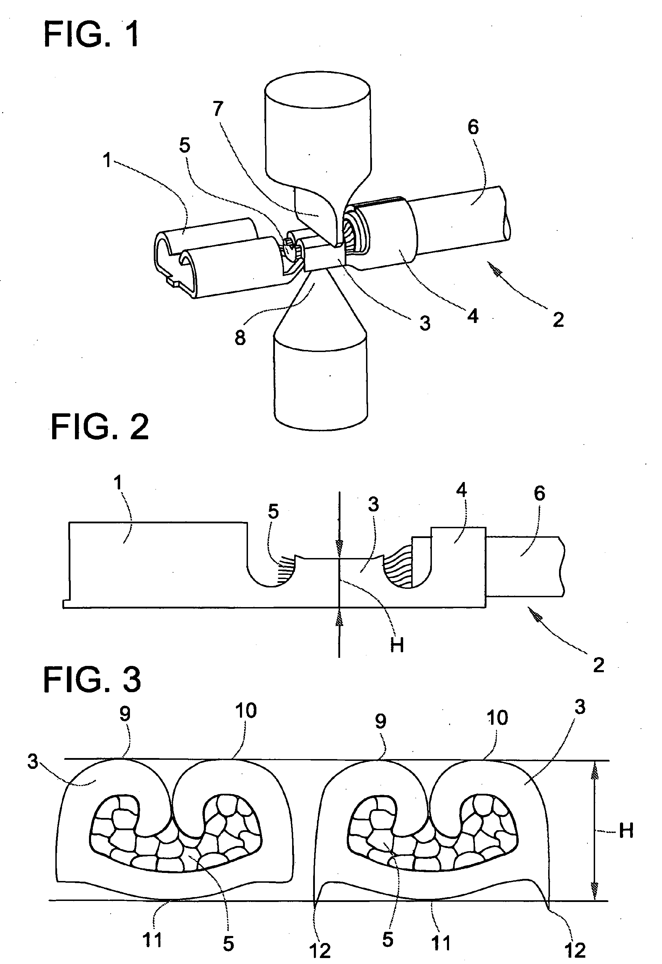

Aus der Anmeldeschrift EP 05110077.4 ist eine Einrichtung zur Messung der Höhe eines Crimpkontaktes bekannt geworden. Einzelheiten dazu sind in den Figuren 1 bis 3 dargestellt.

Fig. 1 bis 3 zeigen eine schematische Darstellung einer mechanischen Messung der Höhe einer Kabelbestückung beispielsweise eines Crimpkontaktes 1. Der an einem Kabel 2 angeschlagene Crimpkontakt 1 weist einen Leitercrimp 3 und einen Isolationscrimp 4 auf, wobei der Leitercrimp 3 einen Kabelleiter 5 umfasst und der Isolationscrimp 4 eine Kabelisolation 6 umfasst. Leitercrimp 3 und Isolationscrimp 4 werden beim Crimpvorgang plastisch deformiert und mittels Crimpstempel und Crimpamboss in die gezeigte Form gepresst. Eine in Verbindung mit einem vertikal bewegbaren Oberteil einer Messeinrichtung stehende erste Schneide 7 ist in Kontakt mit der Oberseite des Leitercrimps 3. Eine in Verbindung mit einem Unterteil der Messeinrichtung stehende Spitze 8 ist in Kontakt mit der Unterseite des Leitercrimps 3. Die Position der Schneide 7 ist messbar mittels einer Linearmesseinrichtung. Die Position der Spitze 8 ist messbar mittels der Linearmesseinrichtung. Die Differenz der beiden Positionen entspricht der in den Fig. 2 und 3 gezeigten Höhe H des Crimpkontaktes 1.

Fig. 3 zeigt einen Querschnitt des Leitercrimps 3 mit den für die Höhenmessung des Crimpkontaktes 1 relevanten Kontaktpunkten. An der Oberseite des Leitercrimps 3 steht die Schneide 7 an einem ersten Punkt 9 und an einem zweiten Punkt 10 in Verbindung mit dem Leitercrimp 3. An der Unterseite des Leitercrimps 3 steht die Spitze 8 an einem dritten Punkt 11 in Verbindung mit dem Leitercrimp 3. Mit 12 sind Gräte bezeichnet, die beim Crimpvorgang durch das nötige Spiel zwischen Crimpstempel und Crimpamboss an der Unterseite des Leitercrimps 3 entstehen. Die Bestimmung der Crimphöhe H ergibt sich aus dem Abstand der durch den ersten Punkt 9 und zweiten Punkt 10 definierten Oberseite von der durch den dritten Punkt 11 definierten Unterseite des Leitercrimps 3.

Nachteilig bei dieser Einrichtung ist, dass die Crimphöhen bei kleinen Crimpkontakten mit Leitercrimplängen unter 2 mm nicht gemessen werden können, weil die mechanischen Seiten- und Höhenzentrierungen dieser Messvorrichtung einen gewissen Raum beanspruchen. Zudem muss die mechanische Messvorrichtung sehr fein und sehr präzise gefertigt sein, damit die gewünschte Messgenauigkeit gewährleistet werden kann, was sich wiederum negativ auf die Herstellungskosten auswirkt.

Des Weiteren ist aus der Druckschrift JP - A - 9 171 878 eine Überwachungseinrichtung mit einer Videokamera bekannt, um die Form des Endes eines Kabels zu erfassen. Dazu umfasst die Überwachungseinrichtung zwei Klemmbacken, um das zu überwachende Kabel zu halten. Unterhalb der Klemmbacken ist eine Lichtquelle angeordnet. Oberhalb der Klemmbacken befindet sich die Videokamera, mit der das Kabelende aufgenommen wird.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und ein Verfahren und eine Einrichtung zu schaffen, mittels dem bzw. mittels der die geometrischen Daten einer Kabelbestückung automatisch bestimmbar sind.

Vorteilhafte Weiterbildungen der Erfindung sind in den abhängigen Patentansprüchen angegeben.

Die durch die Erfindung erreichten Vorteile sind im wesentlichen darin zu sehen, dass die Oberfläche einer Kabelbestückung berührungslos und somit verschleissfrei abtastbar ist. Weiter vorteilhaft ist, dass die Kabelbestückung grossräumig untersucht werden kann. Die Kabelbestückung kann somit ganzheitlich beurteilt werden. Mit dem erfindungsgemässen Verfahren kann ein Oberflächenmodell der Kabelbestückung erzeugt werden. Davon sind weitere Daten wie Abstände, Querschnitte, etc. ableitbar. Für Kabelbestückungen sind keine mechanischen Zentriervorrichtungen mehr nötig. Messfehler wegen nicht korrekt zentrierten Kabelbestückungen während des Messverfahrens sind von vornherein ausgeschlossen. Mit dem erfindungsgemässen Verfahren sind die geometrischen Daten von kleinen wie auch von grossen Kabelbestückungen bestimmbar. Im weiteren ist der Verschleiss der die Kabelbestückungen bearbeitenden Werkzeuge anhand der abweichenden geometrischen Daten der Kabelbestückungen frühzeitig feststellbar.

Beim erfindungsgemässen Verfahren und bei der erfindungsgemässen Einrichtung wird die Oberfläche der Kabelbestückung abgetastet und daraus geometrische Daten der Kabelbestückung bestimmt, wobei mit einer Vielzahl von berührungslosen Distanzmessungen ein Oberflächenmodell der Kabelbestückung erzeugt wird und daraus die geometrischen Daten der Kabelbestückung bestimmt werden. Dieses Verfahren eignet sich für Handarbeitsplätze, Halbautomaten wie auch Vollautomaten.

Bei Vollautomaten mit der erfindungsgemässen Einrichtung können Kabelbestückungen auch während der Produktion gemäss dem erfindungsgemässen Verfahren stichprobenhalber ausgemessen werden.

Anhand der beiliegenden Figuren wird die vorliegende Erfindung näher erläutert.

Es zeigen:

Fig. 1 bis 3 eine schematische Darstellung einer mechanischen Messung der Höhe einer Kabelbestückung,

Fig. 4 eine Messeinrichtung zur berührungslosen Abtastung der Kabelbestückung,

Fig. 5 und 6 unterschiedliche Abtastmuster,

Fig. 7 Distanzmessungen entlang des Abtastmusters,

Fig. 8 die Bestimmung der Höhe der Kabelbestückung,

Fig. 9a und 9b ein Oberflächenmodell bzw. ein Drahtmodell eines Leitercrimps,

Fig. 10a eine aus Messwerten bestimmte Regressionsgerade,

Fig. 10b eine mit Regressionsgeraden aufgespannte Ebene,

Fig. 11 eine berührungslose Abtastung einer als Kabelbestückung vorgesehenen Hülse,

Fig. 12 einen Kabelstrang mit einer berührungslos abtastbaren Verbindung und

Fig. 13 eine Ausführungsvariante der Messeinrichtung.

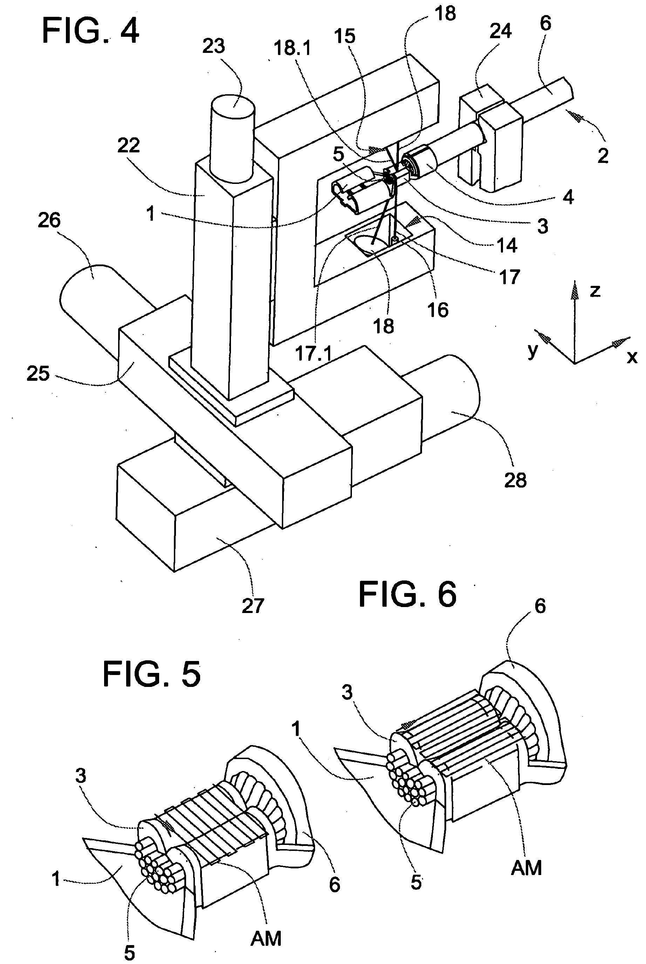

Fig. 4 zeigt eine Messeinrichtung zur berührungslosen Abtastung einer Kabelbestückung. An einem U-förmigen Gehäuse 13 angeordnet sind ein erster Distanzsensor 14 und ein zweiter Distanzsensor 15. Der erste Distanzsensor 14 ist dafür vorgesehen, die Kabelbestückung, im gezeigten Beispiel ein Crimpkontakt 1, von unten berührungslos abzutasten. Der zweite Distanzsensor 15 ist dafür vorgesehen, die Kabelbestückung bzw. den Leitercrimp 3 des Crimpkontaktes 1, von oben berührungslos abzutasten.

Das Gehäuse 13 ist an einer ersten Lineareinheit, beispielsweise an einem ersten Linearschlitten 22 angeordnet, der das Gehäuse 13 in z-Richtung mittels z-Antrieb 23 bewegt. Das Kabel 2 wird mittels Greifer 24 in z-Richtung in einer bestimmten Lage festgehalten. Mit dem ersten Linearschlitten 22 kann die von den Distanzsensoren 14,15 vorgegebene, für die Distanzmessungen optimale Lage der Kabelbestückung 3 in z-Richtung eingestellt werden. Der erste Linearschlitten 22 ist an einer zweiten Lineareinheit, beispielsweise an einem zweiten Linearschlitten 25 angeordnet, der den ersten Linearschlitten 22 in y-Richtung mittels y-Antrieb 26 bewegt. Der zweite Linearschlitten 25 ist an einer dritten Lineareinheit, beispielsweise an einem dritten Linearschlitten 27 angeordnet, der den zweiten Linearschlitten 25 in x-Richtung mittels x-Antrieb 28 bewegt. Mit den x- und y-Antrieben 26,28 werden die Distanzsensoren 14,15 wie in Fig. 5 und 6 gezeigt nach einem bestimmten Abtastmuster relativ zur Kabelbestük-

kung 3 bewegt. Zudem werden bei jeder Distanzmessung wie weiter unten erläutert die jeweiligen x- und y-Koordiaten, beispielsweise durch Lineargeber der Linearschlitten oder durch den Drehgeber des x- bzw. des y-Antriebs festgehalten.

Als Distanzsensor 14,15 ist beispielsweise ein Distanzsensor vorgesehen, der mittels Triangulationsmessung den Abstand eines Messobjektes bzw. die Distanz zum Messobjekt, im gezeigten Beispiel die Oberfläche der Kabelbestückung bzw. die Oberfläche des Leitercrimps, ermittelt. Ein Sender 16 erzeugt einen fokussierten Punkt-Lichtstrahl bzw. Punkt-Laserstrahl 17, der auf der Oberfläche des Messobjektes auftritt. Der vom Messobjekt diffus reflektierte Lichtstrahl 17.1 wird im Empfänger 18 auf ein Lichtempfangselement, beispielsweise ein PSD Element (Position Sensitive Device) oder ein CCD Element (Charged Coupled Device), fokussiert. Die Distanzmessung mittels Triangulation beruht auf dem Vergleich von ähnlichen Dreiecken. Aufgrund der vom Empfänger festgestellten Auslenkung kann auf die Distanz des Messobjektes geschlossen werden bzw. der Ort des Lichtflecks auf dem Lichtempfangselement ist abhängig von der Entfernung des erfassten Messobjektes. Das Ausgangssignal des Lichtempfangselementes ändert sich in Abhängigkeit von der Position des Lichtflecks.

Fig. 5 und 6 zeigen, wie der Lichtstrahl 18 des zweiten Distanzsensors 15 relativ zur Kabelbestückung nach einem bestimmten Abtastmuster AM bewegt wird. Nach dem gleichen Abtastmuster AM wird jeweils der Lichtstrahl 17 des ersten Distanzsensors 14 an der Unterseite der Kabelbestückung bzw. des Leitercrimps 3 bewegt. Fig. 5 zeigt ein quer zur Kabellängsachse verlaufendes Abtastmuster AM. Fig. 6 zeigt ein längs zur Kabellängsachse verlaufendes Abtastmuster AM. Zur Erzeugung des Abtastmusters AM wird das Kabel 2 mit der Kabelbestückung bewegt oder das Gehäuse 13 oder das Gehäuse 13 und das Kabel 2 mit der Kabelbestückung bewegt. Das Abtastmuster AM kann auch kurvenförmige Linien aufweisen.

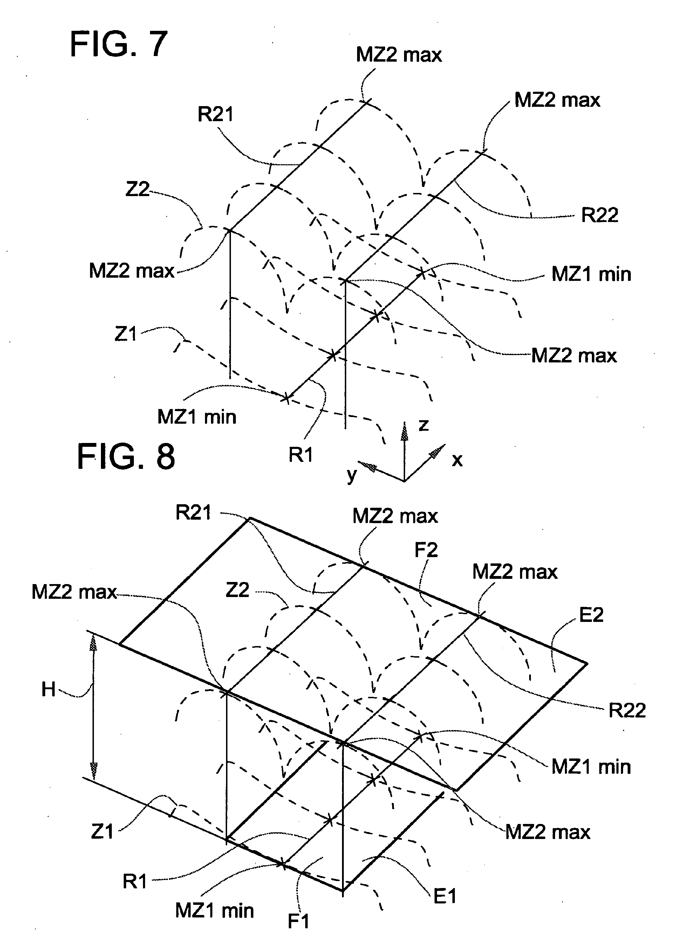

Wie in Fig. 7 dargestellt werden entlang des Abtastmusters AM Distanzmessungen Z1 und Z2 wie folgt durchgeführt: Die Lichtstrahlen 17 und 18 werden an einen ersten Messpunkt mit den Koordinaten x1,y1 bewegt. Die Bewegung in x-Richtung kann beispielsweise mittels des Gehäuses 13 bzw. der Lineareinheit 27 und die Bewegung in y-Richtung kann mittels des Greifers 24 durchgeführt werden. Das Gehäuse 13 bzw. die Lineareinheiten 27, 25 oder der Greifer 24 kann auch die Bewegung in x- und y-Richtung durchführen. Am ersten Messpunkt mit den Koordinaten x1,y1 wird dann die Distanz bzw. der Messwert M1 des jeweiligen Senders zur Oberfläche der Kabelbestückung ermittelt. Die Distanz bzw. der Messwert M1Z1 der Distanzmessung Z1 und die Distanz bzw. der Messwert M1Z2 der Distanzmessung Z2 werden zusammen mit den Koordinaten x1,y1 des ersten Messpunktes in einer Tabelle abgelegt. Dann werden die Lichtstrahlen 17,18 zum zweiten Messpunkt mit den Koordinaten x2,y2 bewegt und der Messwert M2Z1 und der Messwert M2Z2 ermittelt und mit den Koordinaten x2,y2 in der Tabelle abgelegt. Die weiteren Distanzmessungen Z1,Z2 erfolgen sinngemäss.

Die Distanz kann absolut, beispielsweise vom Distanzsensor bis zur Oberfläche der Kabelbestückung gemessen werden. Die Distanz kann auch relativ einem bestimmten Referenzpunkt zugeordnet werden. Beispielsweise kann der erste Messpunkt als Referenzpunkt verwendet werden und die Distanzen der übrigen Messpunkte auf diesen bezogen werden. Die gemessenen Distanzen können auch in z-Koordinaten umgewandelt und zusammen mit den x,y-Koordinaten in der Tabelle abgelegt werden. Wichtig ist, dass die Messwerte der Distanzmessungen eines jeden Distanzsensors auf ein und denselben Koordinatennullpunkt bezogen werden.

Zur Bestimmung des Abstandes der beiden Distanzsensoren 14,15 kann eine Platte mit einer bekannten Dicke mittels Greifer 24 zwischen die Distanzsensoren 14,15 gebracht werden und eine Distanzmessung durchgeführt werden. Der Sensorabstand bzw. die Distanz von Sensor zu Sensor ergibt sich als Summe aus der gemessenen Distanz des einen Sensors zur Platte und aus der Distanz des anderen Sensors zur Platte und aus der Dicke der Platte. Der Koordinatennullpunkt kann beipielsweise auf den einen Distanzsensor gelegt werden und mit dem Abstand der Distanzsensoren die z-Koordinate des anderen Distanzsensors bestimmt werden.

Die Anzahl der Distanzmessungen Z1,Z2 wird je nach Komplexität der Oberfläche des Messobjektes bzw. der Kabelbestückung bestimmt. Fig. 7 zeigt räumlich die Distanzmessungen Z1 des ersten Sensors 14 und die Distanzmessungen Z2 des zweiten Sensors 15. Alle Messwerte zusammen ergeben ein dreidimensionales Abbild der Oberfläche der Kabelbestückung bzw. des Leitercrimps 3.

Je nach Komplexität der Oberfläche des Messobjektes bzw. der Kabelbestückung können auch mehr als zwei Sensoren, beispielsweise auch noch die Kabelbestückung seitlich abtastende Sensoren vorgesehen sein.

Fig. 8 zeigt, wie geometrische Daten beispielsweise die Höhe H der Kabelbestückung bzw. der Höhe des Leitercrimps 3 aus dem Abbild der Oberfläche bestimmt werden. Rechnerisch werden aus den Messwerten der Distanzmessungen Z1 die Minima MZ1min bestimmt und aus den Messwerten der Distanzmessungen Z2 die Maxima MZ2max bestimmt.

Theoretisch liegen diese MZ2max- und MZ1min-Werte auf durch diese Werte gebildeten linearen Regressionsgeraden R1, R21, R22, welche untereinander theoretisch parallel verlaufen. In diesem Fall liegt die Regressionsgerade R1 der MZ1min-Werte genau in der Mitte unterhalb der beiden anderen Regressionsgeraden R21, R22.

Praktisch und bei optimalen Bedingungen (neuer Crimpstempel neuer Crimpamboss, homogenes Kontaktmaterial, korrekte Abisolierlänge, keine Messfehler) liegen diese MZ2max- und MZ1min-Werte relativ nahe auf den durch diese Werte gebildeten linearen Regressionsgeraden R21, R22, R1, welche untereinander praktisch parallel verlaufen. In diesem Fall liegt die Regressionsgerade R1 der MZ1min-Werte ziemlich genau in der Mitte unterhalb der beiden anderen Regressionsgeraden R21, R22. Die Crimphöhe H ist nun die kürzeste Distanz eines Punktes der unteren Regressionsgerade R1 zu einer oberen Ebene E2, welche durch zwei Punkte der einen oberen Regressionsgeraden R21 und einem Punkt der anderen oberen Regressionsgeraden R22 oder umgekehrt gebildet wird.

Eine weitere Berechnungsmethode für die Crimphöhe H ist die Verwendung zweier parallelen Flächen, wobei die Höhe H der Abstand der Flächen ist. Die Ausdehnung und Anfangsposition der Flächen werden dabei so gewählt, dass die Flächen nur Messpunkte berücksichtigen, welche für die Auswertung relevant sind, in diesem Fall die Zone beim Leitercrimp. Sie müssen auch nicht von gleicher Dimension sein, so ist z.B. die Fläche F1 in y-Richtung kleiner (ohne Gräte 12) als die Fläche F2, aber in x-Richtung gleich gross.

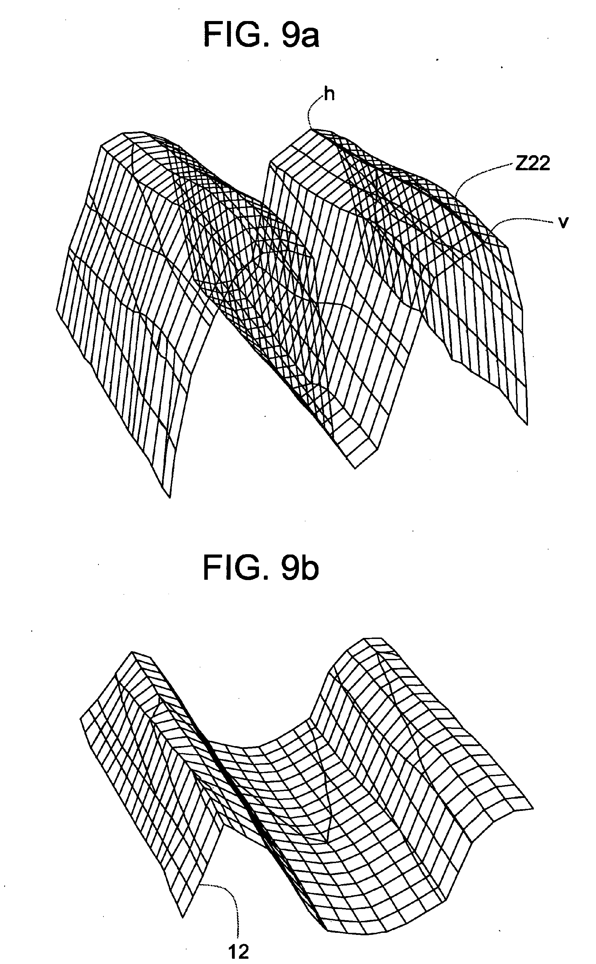

Fig. 9a und 9b zeigen ein gemessenes Abbild der Oberfläche bzw. ein Drahtmodell des durch Leitercrimper und Crimpamboss gebildeten Leitercrimps 3. Das Drahtmodell wird aus den in der Tabelle abgelegten Messwerten der Distanzmessungen Z1,Z2 oder aus den z-Koordinaten und den zugehörigen x,y-Koordinaten erzeugt.

Fig. 9a zeigt ein Drahtmodell eines Ausschnitts von etwa zwei auf zwei Millimeter des Leitercrimps 3, wobei die Formgebung durch den Leitercrimper bestimmt wird.

Fig. 9b zeigt ein Drahtmodell des gleichen Ausschnitts des Leitercrimps 3, wobei die Formgebung durch den Crimpamboss bestimmt wird. Deutlich zu erkennen ist der zulässige Grat 12 auf der linken Seite. Die Distanzmessungen Z1 des Grates 12 liegen aber ausserhalb der Fläche F1 und werden deshalb nicht ausgewertet.

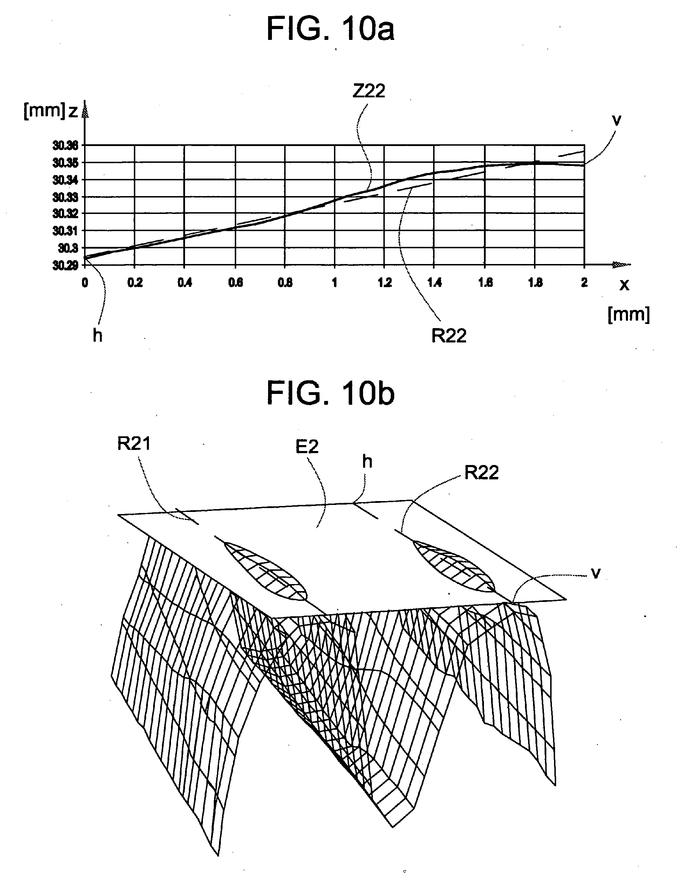

Fig. 10a zeigt die aus den MZ2max-Werten der Fig. 9a gebildete Linie Z22 (fette Linie) und die daraus berechnete Regressionsgerade R22 (gestrichelte Linie).

Die Bestimmung der Regressionsgerade ist allgemein bekannt und kann wie folgt zusammengefasst werden: Eine Regressionsgerade ist jene Gerade, die durch die eine Punktewolke bildenden Messwerte verläuft, wobei die Quadrate der Abstände der Datenpaare (z,x) von der Geraden minimiert sind. Die Regressionsgerade der Fig. 10a folgt der Gleichung

$$z(x) := ax + b$$

wobei a die Steigung der Geraden ist und b der Achsabschnitt auf der z-Achse ist.

Die Linie Z22 und die Regressionsgerade R22 erstrecken sich von hinten h nach vorne v des oben genannten Leitercrimpausschnittes. Auf der x-Achse sind die zwei Millimeter des genannten Ausschnittes dargestellt und auf der z-Achse sind die Messwerte der Distanzmessungen Z2 dargestellt. Die Regressionsgeraden R1 und R21 werden sinngemäss zur Regressionsgeraden R22 bestimmt.

Fig. 10a zeigt, dass der Crimpkontakt 1 und somit auch der Leitercrimp 3 im Raum nach hinten h leicht hängt (etwa 1.8°). Ausserdem kann beispielsweise die Verdrehung des Crimpkontaktes 1 um die Kabellängsachse ermittelt werden. Die Verdrehung ist beispielsweise bestimmbar aus der Lage der Fläche, die vorgegeben ist durch die Regressionsgerade R22 und einen Punkt der Regressionsgeraden R21.

Fig. 10b zeigt am Drahtmodell der Fig. 9a die Ebene E2, die aufgespannt wird durch die Regressionsgerade R22 und durch einen Punkt der Regressionsgeraden R21. Durch Anlegen der Ebene E1 parallel zur Ebene E2 an einen Punkt der Regressionsgeraden R1 kann die Crimphöhe H als Abstand der beiden Ebenen E1, E2 bestimmt werden.

In der Praxis weicht aber die zu messende Kabelbestückung bzw. der zu messende Leitercrimp 3 etwas von der Idealform ab, so beispielsweise durch zufällig vereinzelte Unebenheiten oder Messabweichungen. Um diese verschiedenen Effekte zu berücksichtigen bzw. zu reduzieren, kann ein geeignetes Optimierungsverfahren angewendet werden. Die Ebene E2 darf örtlich geringfügig in das Drahtmodell, wie in Fig. 10a gezeigt, eindringen oder darf leicht von der oder den Regressionsgeraden abweichen, sofern diese Eindringtiefen bzw. Abweichungen wesentlich kleiner sind als die geforderte Messgenauigkeit. Die Crimphöhe entspricht dann dem Abstand der in z-Richtung leicht korrigierten Ebenen.

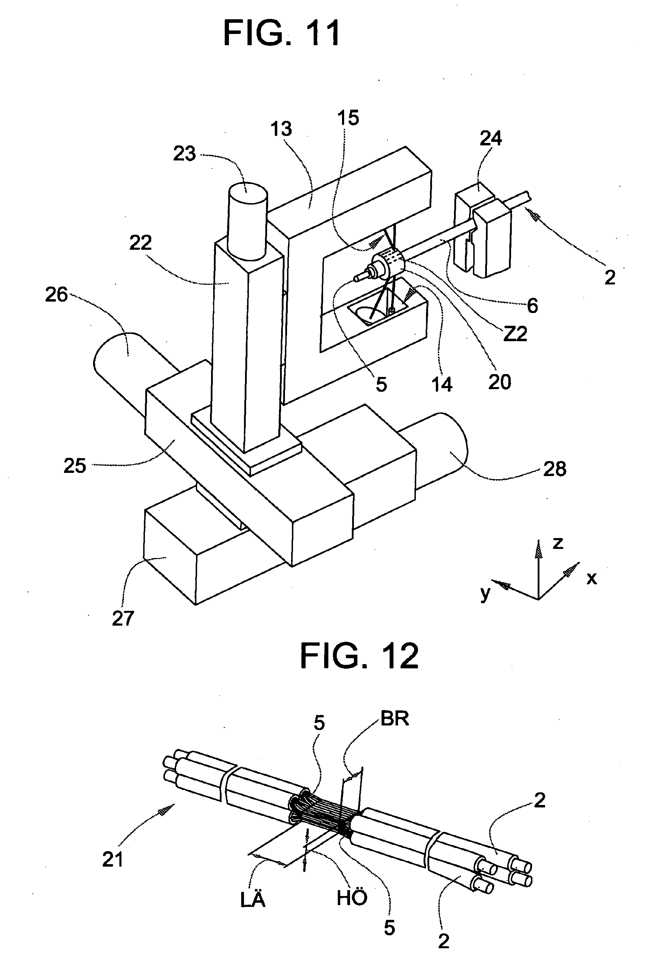

Fig. 11 zeigt die Messeinrichtung zur berührungslosen Abtastung einer auf die Kabelisolation 6 aufgesetzten Kabelbestückung bzw. Hülse 20. Anstelle der Hülse 20 kann auch ein Dichtelement, eine Tülle oder eine ähnliche Bestückung vorgesehen sein. Auch der abisolierte Kabelleiter 5 kann abgetastet werden. Abtastung der Kabelbestückung und Auswertung der Messwerte erfolgt sinngemäss wie oben beschrieben. Die Regressionsgeraden liegen in diesem Fall nicht mehr auf einer ebenen Fläche, sondern auf einer Zylinderfläche. Mit den Regressionsgeraden kann der Durchmesser der Kabelbestückung bzw. der Hülse 20 bestimmt werden.

Fig. 12 zeigt ein aus mehreren Kabeln 2 bestehender Kabelstrang 21, wobei die abisolierten Kabelleiter 5 mittels Elektroschweissen oder Ultraschallschweissen verbunden sind. Dazu ist eine Verdichtung des Querschnitts, bzw. Volumens mit den Massen Breite BR, Höhe HÖ und Länge LÄ nötig. Die Masse müssen während der Produktion möglichst genau beibehalten werden. Die Überprüfung der Masse kann mittels der oben dargestellten Messvorrichtung und mittels des oben dargestellten erfindungsgemässen Verfahrens auch während der Produktion durchgeführt werden. Die Distanzmessungen können mit zwei um 90° versetzten Sensorpaaren durchgeführt werden. Für eine genaue Auswertung ist in diesem Fall eine serielle Abtastung der beiden Sensorpaare vorteilhaft. Es ist auch nur ein Sensorpaar wie oben dargestellt denkbar, wobei der Kabelstrang 21 abgetastet wird, dann um 90° gedreht wird und dann erneut abgetastet wird. Anstatt nach der ersten Messung den Kabelstrang 21 zu drehen, kann auch das Sensorpaar um 90 °gedreht werden.

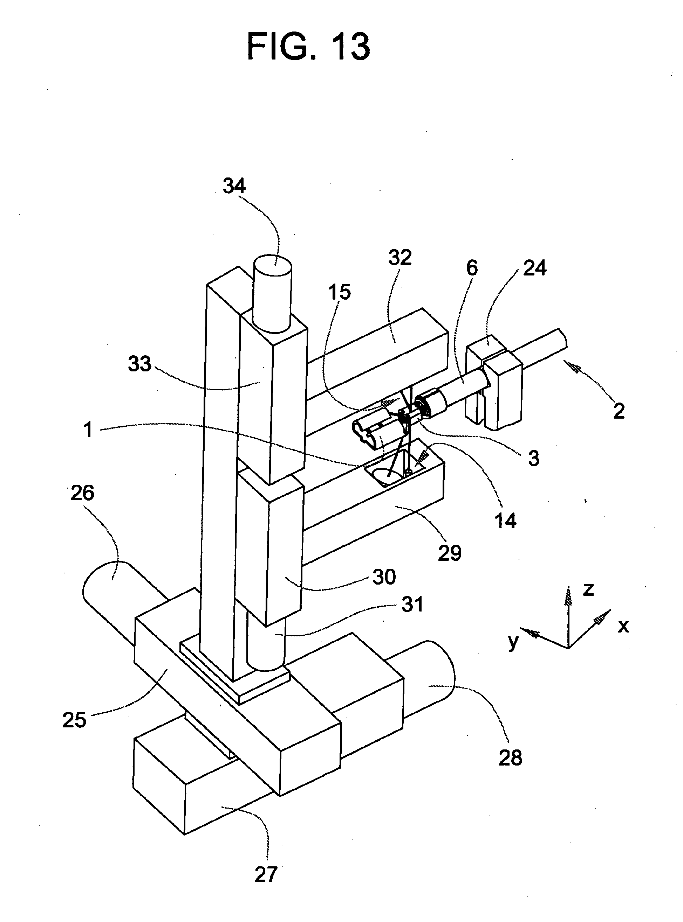

Fig. 13 zeigt eine Ausführungsvariante der Messeinrichtung gemäss Fig. 4, wobei der erste Distanzsensor 14 in z-Richtung und der zweite Distanzsensor 15 in z-Richtung unabhängig bewegbar sind. Das Gehäuse 29 des ersten Distanzsensors 14 ist an einer ersten unteren Lineareinheit, beispielsweise an einem ersten unteren Linearschlitten 30 angeordnet, der das Gehäuse 29 in z-Richtung mittels z1-Antrieb 31 bewegt. Das Gehäuse 32 des zweiten Distanzsensors 15 ist an einer ersten oberen Lineareinheit, beispielsweise an einem ersten oberen Linearschlitten 33 angeordnet, der das Gehäuse 32 in z-Richtung mittels z2-Antrieb 34 bewegt. Der erste untere Linearschlitten wie auch der erste obere Linearschlitten ist mit einem Lineargeber bzw. jeder z-Antrieb ist mit einem Drehgeber ausgerüstet, wobei die genaue Lage des jeweiligen Distanzsensors in z-Richtung mittels des Lineargebers bzw. Drehgebers feststellbar ist.

Im Unterschied zur Distanzmessung gemäss Fig. 4 werden bei dieser Ausführungsvariante die Distanzmessungen mittels des jeweiligen Lineargebers in z-Richtung bzw. des jeweiligen Drehgebers des z-Antriebes durchgeführt, wobei der jeweilige Distanzsensor bei jeder Distanzmessung auf dieselbe, vom Distanzsensor gemessene Distanz zur Oberfläche der Kabelbestückung bewegt wird. In der Tabelle abgelegt werden wiederum die x,y-Koordinaten der Distanzmessung und der Messwert der Distanzmessung bzw. die mittels Lineargeber bzw. Drehgeber gemessene Distanz zur Oberfläche der Kabelbestückung.

Anstelle des oben genannten, mit einem Punkt-Laserstrahl eine Triangulationsmessung durchführenden Distanzsensors kann auch ein mit einem Linien-Laserstrahl eine Triangulationsmessung durchführenden Distanzsensor verwendet werden. Dieser Distanzsensor projiziert über eine Linienoptik eine Laserlinie auf die Oberfläche des Messobjektes bzw. auf die Oberfläche der Kabelbestückung. Eine Optik bildet das diffus reflektierte Licht der Laserlinie auf einer Matrix eines Lichtempfangselementes ab. Der Distanzsensor bestimmt aus dem Linienabbild die Abstandsinformation bzw. die Distanz der Linienpunkte zum Sensor und die zugehörigen Positionen der Punkte in der Linie bzw. die x-Koordinaten der Punkte bezogen auf einen Koordinatennullpunkt des Sensors, der wiederum in Relation gesetzt wird mit der x-Koordinate des dritten Linearschlittens 27. Ablage der Messwerte und Koordinaten in eine Tabelle und Auswertung der Tabelle erfolgt wie oben dargelegt.

Gegenüber dem Sensor mit Punkt-Laserstrahl ist der Sensor mit Linien-Laserstrahl effizienter und somit rascher bei der Abtastung. Das Abtastmuster AM gemäss Fig. 5 oder Fig. 6 kann Zeile um Zeile abgearbeitet werden. Eine Zeile wird mit einer Messung erledigt, dann wird der Sensor vorgeschoben und die nächste Zeile erledigt.

Andere Sensoren zur Messung eines Abstandes bzw. einer Distanz, beispielsweise auf dem Radarprinzip arbeitende Sensoren sind auch möglich.

## Patentansprüche

1. Verfahren zur Bestimmung der geometrischen Daten einer Kabelbestückung, wobei die Oberfläche der Kabelbestückung abgetastet wird und daraus geometrische Daten der Kabelbestückung bestimmt werden,
   **dadurch gekennzeichnet,**
   **dass** mit einer Vielzahl von berührungslosen Distanzmessungen (Z1,Z2) ein Oberflächenmodell der Kabelbestückung (3) erzeugt wird und daraus die geometrischen Daten der Kabelbestückung (3) bestimmt werden.

2. Verfahren nach Anspruch 1,
   **dadurch gekennzeichnet,**
   **dass** die berührungslosen Distanzmessungen (Z1,Z2) nach einem bestimmten Abtastmuster (AM) durchgeführt werden.

3. Verfahren nach einem der Ansprüche 1 oder 2,
   **dadurch gekennzeichnet,**
   **dass** die Messwerte der berührungslosen Distanzmessungen (Z1,Z2) mittels einer Triangulationsmessung ermittelt werden.

4. Verfahren nach einem der vorhergehenden Ansprüche,
   **dadurch gekennzeichnet,**
   **dass** die Distanzmessungen (Z1,Z2) an mehreren Seiten der Kabelbestückung (3) durchgeführt werden.

5. Verfahren nach einem der vorhergehenden Ansprüche,
   **dadurch gekennzeichnet,**
   **dass** aus den Messwerten der berührungslosen Distanzmessungen (Z1,Z2) Minima und Maxima ermittelt und daraus Regressionsgeraden (R1,R21,R22) berechnet werden, wobei mit den Regressionsgeraden (R1,R21,R22) die geometrischen Daten (H) der Kabelbestückung (3) bestimmt werden.

6. Verfahren nach einem der vorhergehenden Ansprüche,
   **dadurch gekennzeichnet,**
   **dass** zu jedem Messwert der berührungslosen Distanzmessungen (Z1,Z2) die Koordinaten (x,y) der Distanzmessungen (Z1,Z2) bestimmt werden und zusammen mit dem Messwert in einer elektronischen Tabelle abgelegt werden.

7. Einrichtung zur Bestimmung der geometrischen Daten einer Kabelbestückung, wobei die Oberfläche der Kabelbestückung abtastbar ist,
   **dadurch gekennzeichnet,**
   **dass** zur Abtastung der Oberfläche Distanzsensoren (14, 15) vorgesehen sind, mittels denen die Distanz zur Oberfläche der Kabelbestückung (3) berührungslos bestimmbar ist, wobei zur Durchführung der Distanzmessungen die Distanzsensoren (14, 15) und die Kabelbestückung (3) relativ zueinander mittels Lineareinheiten (22, 25, 27, 30, 33) und/oder mittels eines das Kabel (2) haltenden Greifers (24) in mindestens zwei Achsrichtungen (x, y, z) bewegbar sind,
   und **dass** die Einrichtung daraus die geometrischen Daten der Kabelbestückung bestimmt.

## Claims

1. Method for determining the geometrical data of a cable fitting in which the surface of the cable fitting is scanned and geometrical data of the cable fitting determined therefrom,
   **characterized in that**
   with a plurality of contactless distance measurements (Z1, Z2), a surface model of the cable fitting (3) is created and therefrom the geometrical data of the cable fitting (3) determined.

2. Method according to Claim 1,
   **characterized in that**
   the contactless distance measurements (Z1,Z2) are performed according to a certain scanning pattern (AM).

3. Method according to one of claims 1 or 2,
   **characterized in that**
   the measurement values of the contactless distance measurements (Z1, Z2) are determined by means of a triangulation measurement.

4. Method according to one of the foregoing claims,
   **characterized in that**
   the distance measurements (Z1, Z2) are performed on several sides of the cable fitting (3).

5. Method according to one of the foregoing claims,
   **characterized in that**
   from the measurement values of the contactless distance measurements (Z1, Z2), minima and maxima are determined and regression lines (R1,R21,R22) calculated therefrom, and with the regression lines (R1,R21,R22) the geometrical data (H) of the cable fitting (3) are determined.

6. Method according to one of the foregoing claims, **characterized in that** for each measurement value of the contactless distance measurements (Z1, Z2) the coordinates (x,y) of the distance measurements (Z1,Z2) are determined and saved together with the measurement value in an electronic table.

7. Device for determining the geometrical data of a cable fitting in which the surface of the cable fitting is scannable, **characterized in that** for the purpose of scanning the surface, distance-sensors (14,15) are provided by means of which the distance from the surface of the cable fitting (3) can be contactlessly determined, and **in that**, for the purpose of performing the distance measurements, by means of linear units (22,25,27,30,33) and/or by means of a gripper (24) that holds the cable (2), the distance sensors (14,15) and the cable fitting (3) are movable relative to each other in the direction of at least two axes (x,y,z), and **in that** the device determines therefrom the geometrical data of the cable fitting.

## Revendications

1. Procédé pour définir les données géométriques d'un garnissage de câble, la surface du garnissage de câble étant explorée et des données géométriques dudit garnissage étant définies à partir de là, **caractérisé en ce qu'**un modèle de surface du garnissage de câble (3) est produit avec plusieurs mesures de distance sans contact (Z1, Z2), et à partir de ce modèle sont définies les données géométriques du garnissage de câble (3).

2. Procédé selon la revendication 1, **caractérisé en ce que** les mesures de distance sans contact (Z1, Z2) sont effectuées suivant un modèle d'exploration défini (AM).

3. Procédé selon la revendication 1 ou 2, **caractérisé en ce que** les valeurs de mesure des mesures de distance sans contact (Z1, Z2) sont recherchées à l'aide d'une mesure par triangulation.

4. Procédé selon l'une des revendications précédentes, **caractérisé en ce que** les mesures de distance (Z1, Z2) sont effectuées sur plusieurs côtés du garnissage de câble (3).

5. Procédé selon l'une des revendications précédentes, **caractérisé en ce que** des minima et des maxima sont recherchés à partir des valeurs de mesure des mesures de distance sans contact (Z1, Z2), et des droites de régression (R1, R21, R22) sont calculées à partir de là, les données géométriques (H) du garnissage de câble (3) étant définies avec les droites de régression (R1, R21, R22).

6. Procédé selon l'une des revendications précédentes, **caractérisé en ce que** les coordonnées (x, y) des mesures de distance (Z1, Z2) sont définies pour chaque valeur de mesure des mesures de distance sans contact (Z1, Z2) et sont déposées avec la valeur de mesure dans un tableau électronique.

7. Dispositif pour définir les données géométriques d'un garnissage de câble, la surface du garnissage de câble étant apte à être explorée, **caractérisé en ce qu'**il est prévu pour l'exploration de la surface des capteurs de distance (14, 15) à l'aide desquels la distance par rapport à la surface du garnissage de câble (3) peut être définie sans contact, étant précisé que pour effectuer les mesures de distance, les capteurs de distance (14, 15) et le garnissage de câble (3) sont mobiles les uns par rapport aux autres dans au moins deux directions axiales (x, y, z) à l'aide d'unités linéaires (22, 25, 27, 30, 33) et/ou à l'aide d'un organe de préhension (24) qui tient le câble (2), et **en ce que** le dispositif définit à partir de là les données géométriques du garnissage de câble.

# FIG. 1

# FIG. 2

# FIG. 3

FIG. 4

FIG. 6

FIG. 5

# FIG. 7

# FIG. 8

# FIG. 9a

# FIG. 9b

# FIG. 10a

# FIG. 10b

# FIG. 11

# FIG. 12

# FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 05110077 A
- JP 9171878 A